(19) Europäisches Patentamt
European Patent Office
Office européen des brevets

(11) Veröffentlichungsnummer: **0 268 051 B1**

(12) # EUROPÄISCHE PATENTSCHRIFT

(45) Veröffentlichungstag der Patentschrift: **09.05.90**

(51) Int. Cl.⁵: **C09D 5/44**, C09D 5/02

(21) Anmeldenummer: **87114475.4**

(22) Anmeldetag: **03.10.87**

(54) **Verfahren zur Katalysierung kationischer Lackbindemittel.**

(30) Priorität: **17.10.86 AT 2760/86**

(43) Veröffentlichungstag der Anmeldung: **25.05.88 Patentblatt 88/21**

(45) Bekanntmachung des Hinweises auf die Patenterteilung: **09.05.90 Patentblatt 90/19**

(84) Benannte Vertragsstaaten: **DE ES FR GB IT NL**

(56) Entgegenhaltungen:
**EP-A- 0 004 090**
**EP-A- 0 065 163**
**EP-A- 0 082 214**
**EP-A- 0 137 459**
**FR-A- 2 386 620**

(73) Patentinhaber: **Vianova Kunstharz Aktiengesellschaft, A-8402 Werndorf(AT)**

(72) Erfinder: **Schipfer, Rudolf, Dr., Ernst Haeckelstrasse 53, A-8010 Graz(AT)**
Erfinder: **Daimer, Wolfgang, Dipl.-Ing., Rosenberggürtel 37, A-8010 Graz(AT)**
Erfinder: **Schmölzer, Gerhard, Dr., Elsteichgasse 37, A-8010 Graz(AT)**

EP 0 268 051 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Katalysierung von kationischen Lackbindemitteln, insbesondere von Materialien, wie sie für die kathodische Elektrotauchlakkierung verwendet werden.

Kathodisch abscheidbare, Elektrotauchlackbindemittel werden zu einem wesentlichen Teil durch Umesterung, Umamidierung bzw. Umurethanisierung oder durch Reaktionen endständiger Doppelbindungen bei erhöhter Temperatur vernetzt.

Es ist bekannt, daß Vernetzungsreaktionen dieser Art durch Metallverbindungen katalysiert werden. Eine solche Katalyse ist im Falle der Härtung von kathodisch abgeschiedenen Lackfilmen praktisch in allen Fällen notwendig, um das von der Praxis geforderte Eigenschaftsbild zu erreichen.

Die wichtigsten in der Praxis verwendeten Katalysatoren sind Verbindungen des zweiwertigen Bleis, welches entweder als Blei (II)oxid oder in Form seiner Salze mit längerkettigen Fettsäuren (Naphthensäuren, Octansäuren) sowie mit wasserlösliche Salze bildenden Säuren (Ameisensäure, Essigsäure, Milchsäure, u. a.) oder als ein zumindest teilweise mit der Neutralisationssäure des kationischen Bindemittels reagierendes und dabei wasserlösliche Salze bildendes Pigment (basisches Bleisilikat) eingesetzt wird.

Alle derzeit für diesen Zweck eingesetzten Katalysatoren weisen jedoch in kathodisch abscheidbaren Elektrotauchlacken wesentliche Nachteile auf.

Die als feste Stoffe eingesetzten Bleiverbindungen (Bleioxid bzw. basisches Bleisilikat) werden erst im Lack gelöst. Die Lacke bedürfen daher längerer Homogenisierungszeiten, bis die Wirksamkeit des Bleisalzes als Katalysator gegeben ist. Die dabei gebildeten wasserlöslichen Salze befinden sich - ebenso wie andere dem Lack unmittelbar zugesetzte wasserlösliche Salze -zu einem wesentlichen Teil nicht in der Harzmicelle, sondern in der wäßrigen Phase des Lackes. Sie werden bei der elektrischen Abscheidung durch den im Film auftretenden Endosmoseeffekt, welcher eine Entwässerung des Filmes bewirkt, aus dem Film ausgewaschen oder auf dem Substrat als metallischer Niederschlag abgeschieden. Gelöste Salze werden überdies anteilig durch die bei Elektroabscheidungsanlagen eingesetzten Dialysevorrichtungen aus dem Bad entfernt und gegebenenfalls bei Sprühvorgängen in unkontrollierter Weise wieder ins Bad rückgeführt.

Die nichtwasserlöslichen Salze längerkettiger Fettsäuren sind im Harz löslich und verbleiben daher weitgehend in der Harzmicelle. Durch Hydrolyse enstehen jedoch titrierbare Mengen an wasserunlöslichen Fettsäuren, durch welche das Abscheidungsverhalten und die Badführung bei der Elektrotauchlackierung erheblich gestört wird.

Gemäß der EP-A1-00 82 214 wurde versucht, die katalytisch wirksamen Metalle durch Reaktion mit dem tertiären Aminogruppen und Hydroxylgruppen tragenden Bindemittel zu fixieren, doch sind für diese Reaktionen Temperaturen von 100 bis 150°C notwendig, was bei den heute bevorzugten reaktiven Harztypen bereits zu Vernetzungen führt. Außerdem muß das Harz für diese Prozedur mit wesentlich höheren Anteilen an Lösemittel versetzt werden, wodurch die Herstellung von Lackbädern mit niedrigen Lösemittelanteilen (Low-VOC-Typen) wesentlich erschwert wird.

Es wurde nun gefunden, daß die genannten Nachteile vermieden werden können, wenn man als Bleiverbindungen Umsetzungsprodukte des Bleioxids mit β-Hydroxyalkylaminostrukturen aufweisenden Komponenten einsetzt.

Die Erfindung betrifft demgemäß ein Verfahren zur Katalysierung von durch Umesterung und/oder Umamidierung und/oder Umurethanisierung und/oder Reaktionen endständiger Doppelbindungen vernetzbarer kationischer Lackbindemittel durch Bleiverbindungen, welches dadurch gekennzeichnet ist, daß dem kationischen Lackmaterial in irgendeiner Phase der Herstellung des Lackes oder während der Verarbeitung, insbesondere bei der kathodischen Elektrotauchlackierung, Umsetzungsprodukte aus Blei(II)oxid und β-Hydroxyalkylaminostrukturen aufweisenden Verbindungen zugesetzt werden.

Die Erfindung betrifft weiters die nach diesem Verfahren katalysierten kationischen Lackmaterialien, insbesondere nach diesem Verfahren katalysierte Elektrotauchmaterialien (KTL-Bäder).

Die für das erfindungsgemäße Verfahren eingesetzten Katalysatoren sind auch in der Kälte mit den verschiedenen kationischen Materialien auf der Basis von Kondensations-, Polymerisations- und Polyadditionsharzen einwandfrei verträglich. Durch ihre organophilen Molekülsegmente verbleiben sie im verdünnten wäßrigen Lackmaterial in der Harzphase und damit auch in einem durch die Endosmose bei der Elektrotauchlackierung weitgehend entwässerten Film. Die Produkte unterliegen bei längerer Lagerung bzw. in der Elektrotauchlackieranlage keiner hydrolytischen Spaltung. Die gegebenenfalls beim Einbrennen auftretenden Spaltprodukte sind flüchtig und ökologisch harmlos.

Die erfindungsgemäß eingesetzten Bleiverbindungen entstehen durch Umsetzung des Blei(II)oxids mit β-Hydroxyalkylaminostrukturen aufweisenden Verbindungen unter Abspaltung von Wasser z. B. gemäß der Reaktionsgleichung

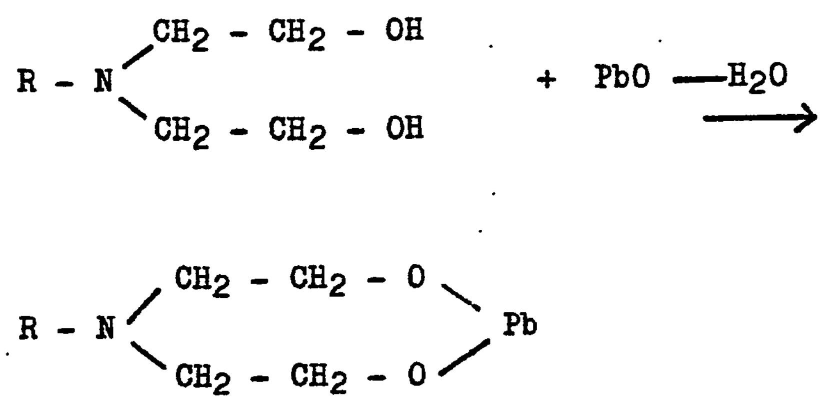

R kann dabei ein Wasserstoffatom, ein Alkyl- oderAlkanolrest oder ein Rest einer höhermolekularen Verbindung sein.

Die gegebenenfalls in kristalliner Form anfallenden Verbindungen sind nach teilweiser oder vollständiger Neutralisation ihrer basischen Gruppen mit Wasser verdünnbar.

Als β-hydroxyalkylaminofunktionelle Verbindungen können primäre, sekundäre oder tertiäre β-Hydroxyalkylamine wie Mono-, Di- oder Triethanolamin, die entsprechenden Isopropanolamine, (Cyclo)-Alkylalkanolamine, N-Phenylalkanolamine, N-Amino-alkyl-N-alkanolamine oder 2-Aminoalkanole oder -alkandiole sowie heterocyclische Verbindungen, wie das N-Hydroxyethylpiperazin etc eingesetzt werden.

Bevorzugt werden jedoch Verbindungen, in welchen R einen höhermolekularen Rest darstellt. Beispiele für solche Verbindungen sind Umsetzungsprodukte von Glycidylgruppen tragenden Verbindungen mit sekundären Mono-alkanolaminen bzw. vorzugsweise sekundären Dialkanolaminen. Der Rest R kann in diesem Fall von Mono- oder Diepoxidverbindungen, wie sie in den handelsüblichen Epoxidharzen mit einem Epoxidäquivalentgewicht bis zu ca. 1000 vorliegen, stammen. Ebenso kann R auch der Rest eines niedermolekularen Glycidylgruppen aufweisenden (Co)-Polymerisates sein.

Besonders bevorzugt werden für das erfindungsgemäße Verfahren Umsetzungsprodukte von Bisphenol-A-Epoxidharzen und Diethanolamin.

Die Hydroxylgruppen dieser Verbindungen können vollständig oder teilweise mit dem Bleioxid umgesetzt werden.

Die Herstellung der erfindungsgemäß eingesetzten Katalysatorverbindungen erfolgt durch Umsetzung des Alkanolamins mit dem Bleioxid bei 70 bis 110°C. Die Reaktion kann entweder in Substanz oder in Gegenwart von Lösemitteln, wie Glykolether oder Ketonen erfolgen. Vor allem bei höhermolekularen Reaktionspartnern ist die Verwendung von Lösemitteln notwendig und vorteilhaft. Das Reaktionswasser kann gegebenenfalls durch azeotrope Destillation mit einem Schleppmittel, z.B. einem Benzinkohlenwasserstoff, Siedebereich 80-120°C ,aus dem Reaktionsgut, entfernt werden.

Die erfindungsgemäß verwendeten Katalysatorverbindungen können dem Lackmaterial zu jedem Zeitpunkt der Herstellung des Lackes zugesetzt werden. Die Zugabe kann in konzentrierter Form zum Bindemittel, zu einem eventuell eingesetzten Pigmentanreibeharz oder zur Pigmentpaste erfolgen, wobei gegebenenfalls die Protonierung zusammen mit dem Bindemittel erfolgt. Die Verbindungen können aber auch in neutralisierter und mit Wasser und/oder Hilfslösemitteln verdünnter Form dem verdünnten Lackmaterial zugesetzt werden. Bei der Elektrotauchlackierung kann die verdünnte wäßrige Lösung auch während des Betriebes dem Badmaterial zugesetzt werden.

Die erfindungsgemäß eingesetzten Katalysatorverbindungen werden in einer Menge eingesetzt, daß der Lack, bezogen auf den Bindemittelfestkörper 0,1 bis 3,0 Gew.-%, vorzugsweise 1,0 bis 2,0 Gew.-% Blei (berechnet als Metall) enthält.

Lackbindemittel, welche mit Hilfe des erfindungsgemäßen Verfahrens katalysiert werden können, sind in großer Zahl aus der Literatur bekannt. Ein häheres Eingehen auf den Aufbau und die Chemie dieser Produkte ist daher nicht notwendig.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Folgende Abkürzungen werden in den Beispielen verwendet:

AEPD 2-Amino-2-ethyl-propandiol-1,3
CE Glycidylester von $C_9$-$C_{11}$-tert.-Monocarbonsäuren
DIPA Diisopropanolamin
DMF Dimethylformamid
DOLA Diethanolamin
EGL Ethylenglykolmonoethylether

EPH I Bisphenol A-diglycidylether (Epoxidäquivalent ca 190)
EPH II Polyglykoldiglycidylether (Epoxidäquivalent ca. 200)
EPH III Bisphenol A-Epoxidharz (Epoxidäquivalent ca 475)
FH Festharz
MDE Malonsäurediethylester
MEOLA Monoethanolamin
PG Propylenglykol-1,2
PM Propylenglykolmonomethylether (Methoxypropanol)
TROLA Triethanolamin
MDM Malonsäuredimethylester

(A) Herstellung der Katalysatorverbindungen

Gemäß den in der Tabelle 1 gemachten Angaben werden verschiedene Katalysatorverbindungen hergestellt. Niedermolekulare Alkanolamine können ohne Mitverwendung von Lösemitteln mit dem Blei(II)oxid umgesetzt werden. Die gebildeten kristallinen Verbindungen werden abfiltriert und mit Ethanol gewaschen.

Bei der Verwendung von Epoxid-Amin-Addukten als β-Hydroxyalkylaminverbindungen erfolgt zuerst die Umsetzung des Epoxidharzes mit dem Alkanolamin, bei ca 60°C in Gegenwart eines Lösemittels, bevorzugt von Methoxypropanol oder einem ähnlichen Glykolether. Nach Umsetzung aller Epoxidgruppen wird bei der in der Tabelle 1 angegebenen Temperatur das Bleioxid portionsweise zugesetzt, wobei die nächste Zugabe erst erfolgt, wenn das Bleioxid vollständig gelöst ist.

Die Katalysatorverbindung K 10 wird in der Weise hergestellt, daß man das Epoxidharz im PM löst und bei 60°C mit dem DOLA umsetzt, bis ein MEQ-Wert von 3,3 erreicht ist. Anschließend wird bei 60°C das AEPD zugegeben und die Reaktion bis zu einem MEQ-Wert von 2,25 weitergeführt. Die Zugabe und Reaktion des Bleioxids erfolgt in der oben angegebenen Weise.

Die Katalysatorverbindungen K 4, K 6 und K 7 sind nach Zugabe von 40 Millimol Essigsäure, K 10 nach Zugabe von 80 Millimol Essigsäure pro 100 g Festharz mit Wasser einwandfrei verdünnbar.

(B) Herstellung und Prüfung der katalysierten Lacksysteme

In den folgenden Beispielen 1 bis 16 werden Kombinationen mit Bindemitteln hergestellt, die durch Umesterung härtbar sind. Die Beispiele 1 und 6 sind Vergleichsbeispiele, in welchen gemäß dem Stand der Technik Bleioktoat als Katalysator eingesetzt wird. Die Zusammensetzungen sind in der Tabelle 2 zusammengefaßt.

Die Einarbeitung der Katalysatorverbindungen erfolgte auf zwei verschiedenen Wegen:

Methode 1:

Bindemittel und Katalysatorverbindung werden in 60%iger Lösung in einem organischen Lösemittel, vorzugsweise einem Glykolether, wie PM, bei ca 40°C homogen vermischt. Die Mischung wird nach 24 Stunden auf eine Glasplatte in einer Naßfilmdicke von 30 µm aufgezogen und 30 Minuten bei den in der Tabelle 3 angegebenen Temperatur (140, 150 und 160°C) eingebrannt. Die eingebrannten Filme werden durch Prüfung der Acetonfestigkeit verglichen.

Praktisch gleiche Ergebnisse wie bei Anwendung der Methode 2 (s.u.) werden erhalten, wenn die Mischungen nach Neutralisation mit 45 Millimol Ameisensäure pro 100 g Festharz mit deionisiertem Wasser auf einen Festkörpergehalt von 15% verdünnt werden und Filme mit einer Trockenfilmstärke von 22 ± 2µm auf entfettetem Stahlblech kathodisch abgeschieden und wie oben angegeben eingebrannt werden.

Methode 2:

Dabei werden die Bindemittellösungen nach Neutralisation mit Ameisensäure mit deionisiertem Wasser auf einen Festkörpergehalt von 15% verdünnt. Zu diesem Klarlack wird eine mit Ameisensäure oder Essigsäure entsprechend neutralisierte und mit deionisiertem Wasser auf 30% verdünnte Lösung der Katalysatorverbindung unter Rühren langsam zugegeben. Aus diesem Klarlack werden nach einer Homogenisierungszeit von 24 Stunden Filme mit einer Trockenfilmstärke von 22 ± 2 µm auf entfettetem Stahlblech kathodisch abgeschieden und 30 Minuten eingebrannt.

Die Prüfung der bei 140, 150 und 160°C eingebrannten Filme auf ihre Acetonfestigkeit erfolgt durch Auflegen eines mit Aceton getränkten Wattebausches auf den Lackfilm und Bestimmung der Zeit, nach welcher der Film durch Kratzen mit dem Fingernagel verletzt werden kann.

Die Ergebnisse sind in der Tabelle 2 zusammengefaßt.

Als Bindemittel werden folgende Produkte eingesetzt:

BM 1 Partielles Kondensationsprodukt aus Basisharz M 1 (70 Tle) und Härterkomponente S 1(30 Tle). Die Kondensation der beiden Komponenten erfolgte 2 Stden bei 120°C.

BM 2 Partielles Kondensationsprodukt aus Basisharz M 2 (70 Tle) und Härterkomponente S 2 (30 Tle). Kondensationsbedingungen: 2 Stden/120°C.

Die Herstellung der Bindemittelkomponenten erfolgt in der nachfolgend angegeben Weise:

Basisharz M 1:

1627 g (3,43 Val) eines Epoxidharzes auf Basis Bisphenol A (Epoxidäquivalentgewicht ca. 475) werden mit 226 g (0,24 COOH-Val) eines Polyesters aus 3 Mol Trimethylolpropan, 2 Mol Adipinsäure, 1 Mol Isononansäure und 1 Mol Tetrahydrophthalsäureanhydrid (Säurezahl) 65 mg KOH/g, Carboxyläquivalent 942 g) in 85%iger Lösung in PM bei 110°C bis zu einer Säurezahl von weniger als 5 mg KOH/g umgesetzt.
Nach Verdünnen des Ansatzes mit PM auf einen Festkörpergehalt von 70 % erfolgt bei 60°C innerhalb von 2 Stunden die Zugabe einer Mischung von 94,5 g (0,9 Val) DOLA, 67,5 G (0,9 Val) MEOLA, 78 g (1,2 Val) DEAPA und 240 g PM. Anschließend wird die Temperatur auf 90°C gesteigert und diese Temperatur für eine Stunde gehalten. Nach Zusatz von 5 Gew.% (bezogen auf den Festharzanteil des Ansatzes) Polypropylenglykoldiglycidylether wird bei 90°C bis zur Umsetzung aller Glycidylgruppen reagiert. Das Produkt weist eine Aminzahl von 76 mg KOH/g und eine Hydroxylzahl (prim. OH) von 89 mg KOH/g auf. Der Festkörpergehalt wird mit PM auf 70% eingestellt.

Basisharz M 2:

190 g eines Bisphenol-A-Epoxidharzes (1 Epoxidäquivalent) und 1425 g eines Bisphenol-A-Epoxidharzes (3 Epoxidäquivalente) werden bei 100°C in 597 g EGL gelöst. Die Lösung wird auf 60°C gekühlt und mit 126 g DOLA versetzt. Man steigert die Temperatur während 2 Stunden langsam auf 80°C. Anschließend werden 169 g DEAPA zugegeben und die Temperatur in 2 Stunden auf 120°C gesteigert. Bei dieser Temperatur werden 478 g CE zugegeben und anschließend 5 Stunden bei 130°C unter Rühren belassen. Man verdünnt mit EGL auf 65 % Harzegehalt. Das Festharz hat eine Aminzahl von 91 mg KOH/g und eine Hydroxylzahl von 265 mg KOH/g.

Vernetzungskomponente S 1:

In einem geeigneten Reaktionsgefäß mit einer für das Azeotropverfahren geeigneten Einrichtung und einer Glockenbodenkolonne zur Abtrennung der bei der partiellen Umesterung gebildeten Alkoholkomponente wird zu einer Mischung aus 1 Mol MDM und der Katalysatormischung (je 0,5 bis 1,0 Mol-%, bezogen auf Ester, von Piperidin und Ameisensäure) bei 70 bis 80°C portionsweise 0,5 Mol Formaldehyd als Paraformaldehyd zugegeben, ohne daß die Temperatur durch die exotherme Reaktion max. 90°C überschreitet. Diese Temperatur wird gehalten, bis der Paraformaldehyd vollständig gelöst ist. Anschließend wird die Temperatur langsam auf 110 bis 120°C erhöht und das gebildete Reaktionswasser mit Hilfe eines geeigneten Schleppmittels aus dem Reaktionsgemisch entfernt. Nach Entfernen des Schleppmittels durch Anlegen eines Vakuums werden 0,2 Mol PG zugegeben und die Temperatur bis zum Einsetzen der Destillation erhöht. Die Reaktion wird fortgesetzt, bis ein Brechungsindex n 20/D von 1,4632 und eine Grenzviskositätzahl in DMF/20°C von 2,1 ml/g erreicht ist. Das Produkt weist einen Festkörpergehalt (30 min./120°C) von ca 95%, eine Hydroxylzahl von weniger als 5 mg KOH/g und ein Esteräquivalent von 48 auf.

Vernetzungskomponente S 2:

In gleicher Weise wie bei der Vernetzungskomponente S 1 werden 1 Mol MDE mit 0,9 Mol Formaldehyd (eingesetzt als Paraformaldehyd) und 0,3 Mol PG biz zu einem Brechungsindex von 1,4670 und einer Grenzviskositätszahl in DMF/20°C von 5,2 ml/g umgesetzt. Das Produkt weist einen Festkörpergehalt von ca 94% (30 min/120°C), eine Hydroxylzahl von weniger als 5 mg KOH/g und ein Esteräquivalent von 83 auf.

TAB 1 (Die Mengen der Reaktanten sind in Mol angegeben)

| Kat | Alkanolamin | | | Glycidylverbindung | | | | | MP (1) | | Reaktionsbed. |
|---|---|---|---|---|---|---|---|---|---|---|---|
| Vbg. | TROLA | DOLA | DIPA | AEPD | CE | EPH I | EPH II | EPH III | % | PbO | Stden/Temp. °C |
| K 1 | 1 | | | | | | | | – | 1 | 1/60 |
| K 2 | | 1 | | | | | | | – | 1 | 4/90 |
| K 3 | | | 1 | | | | | | – | 1 | 4/90 |
| K 4 | | 2 | | | | 1 | | | 60 | 1 | 6/100 |
| K 5 | | 2 | | | | 1 | | | 60 | 2 | 6/120 |
| K 6 | | | 2 | | | 1 | | | 60 | 1 | 6/100 |
| K 7 | | 2 | | | | | 1 | | 70 | 1 | 6/100 |
| K 8 | | 2 | | | | | | 1 | 60 | 1 | 5/120 |
| K 9 | | 1 | | | 1 | | | | 70 | 1 | 6/100 |
| K 10 | | 2 | | 1 | | 2 | | | 70 | 1 | 4/120 |

(1) Die Menge des Lösemittels (Metoxypropanol) ist auf den resultierenden Festkörpergehalt des Endproduktes bezogen

TAB 2 (Die Menge der Katalysatorverbindung ist als % wirksamer Metallgehalt bezogen auf Bindemittel-Festharz angegeben)

| Beispiel | Bindemittelkombination | % Metall ex Katalysatorverbindung | eingesetzte Katalysatorverbindung | Verarbeitungsmethode | Acetonfestigkeit in Sekunden bei Einbrenntemperatur 140°C | 150°C | 160°C |
|---|---|---|---|---|---|---|---|
| 1 (V) | BM 1 | 1 | Bleioctoat | 2 | 70 | 80 | 110 |
| 2 | BM 1 | 1 | K 4 | 2 | 100 | über 120 | über 120 |
| 3 | BM 2 | 1 | K 6 | 2 | 90 | über 120 | über 120 |
| 4 | BM 2 | 1 | K 7 | 2 | über 120 | über 120 | über 120 |
| 5 | BM 1 | 1 | K 10 | 2 | 80 | 110 | über 120 |
| 6 | BM 1 | 2 | Bleioctoat | 1 | 30 | 35 | 40 |
| 7 | BM 1 | 2 | K 1 | 1 | 50 | 60 | 70 |
| 8 | BM 1 | 2 | K 2 | 1 | 40 | 50 | 65 |
| 9 | BM 1 | 2 | K 3 | 1 | 40 | 50 | 60 |
| 10 | BM 1 | 2 | K 4 | 1 | 55 | 60 | 70 |
| 11 | BM 1 | 2 | K 5 | 1 | 60 | 65 | 65 |
| 12 | BM 2 | 2 | K 6 | 1 | 55 | 65 | 70 |
| 13 | BM 2 | 2 | K 7 | 1 | 50 | 60 | 60 |
| 14 | BM 2 | 2 | K 8 | 1 | 50 | 65 | 65 |
| 15 | BM 2 | 2 | K 9 | 1 | 40 | 50 | 55 |
| 16 | BM 2 | 2 | K 10 | 1 | 60 | 70 | 70 |

## Patentansprüche

1. Verfahren zur Katalysierung von durch Umesterung und/oder Umamidierung und/oder Umurethanisierung und/oder Reaktionen endständiger Doppelbindungen vernetzbarer kationischer Lackbindemittel durch Bleiverbindungen, dadurch gekennzeichnet, daß dem kationischen Lackmaterial in irgendeiner Phase der Herstellung des Lackes oder während der Verarbeitung, insbesondere bei der kathodischen Elektrotauchlackierung, Umsetzungsprodukte aus Blei(II)oxid und β-Hydroxyalkylaminostrukturen aufweisenden Verbindungen zugesetzt werden.

2. Verfahren nach Anspruch 1, dadurch gekennzeichnet, daß man die Katalysatorverbindung vor der Protonierung mit dem Bindemittel homogenisiert und die Komponenten gemeinsam protoniert und mit Wasser verdünnt.

3. Verfahren nach Anspruch 1, dadurch gekennzeichnet, daß man die Katalysatorverbindung protoniert und mit Wasser verdünnt und in dieser Form einem Bindemittelkonzentrat oder einem verdünnten Lackmaterial zusetzt.

4. Verfahren nach Anspruch 3, dadurch gekennzeichnet, daß man die verdünnte Katalysatorverbindung einem Elektrotauchlack, welcher sich in einer in Betrieb stehenden Analge befindet, zusetzt.

5. Verfahren nach den Ansprüchen 1 bis 4, dadurch gekennzeichnet, daß man als Katalysatorverbindungen Umsetzunsprodukte von Blei(II)oxid mit niedermolekularen primären, sekundären oder tertiären β-Hydroxyalkylaminen einsetzt.

6. Verfahren nach den Ansprüchen 1 bis 4, dadurch gekennzeichnet, daß man als Katalysatorverbindungen Umsetzungsprodukte von Blei(II)oxid mit Addukten aus sekundären Mono- oder Dialkanolaminen und Glycidylgruppen tragenden Verbindungen einsetzt.

7. Verfahren nach Anspruch 6, dadurch gekennzeichnet, daß man als Katalysatorverbindungen Umsetzungsprodukte von Blei(II)oxid mit Addukten aus Dialkanolaminen und Bisphenol-A-Epoxidharzen einsetzt.

8. Verfahren nach den Ansprüchen 1 bis 7, dadurch gekennzeichnet, daß solche Umsetzungsprodukte eingesetzt werden, bei deren Herstellung die β-ständigen Hydroxylgruppen der Aminverbindungen vollständig oder teilweise mit Blei(II)oxid umgesetzt wurden.

9. Katalysierte kationische Lackmaterialien, insbesonders kathodisch abscheidbare Lacke, dadurch gekennzeichnet, daß sie 0,1 bis 3,0 Gew.-%, vorzugsweise 1,0 bis 2,0 Gew.-% Blei (berechnet als Metall und bezogen auf Bindemittelfestkörper) in Form der gemäß den Ansprüchen 1 bis 8 eingesetzten Katalysatorverbindungen enthalten.

**Revendications**

1. Procédé pour catalyser par des composés du plomb la réticulation de liants de peintures cationiques réticulables par transestérification et/ou transamidation et/ou transuréthanisation et/ou par des réactions avec des doubles liaisons terminales, est caractérisé en ce que des produits de réaction de l'oxyde de plomb (II) et de composés présentant des structures β-hydroxyalkylamino sont ajoutés au produit pour peinture cationique au cours d'une phase quelconque de la préparation de la peinture ou pendant le traitement, en particulier au cours du trempage électrophorétique cathodique.

2. Procédé selon la revendication 1, caractérisé en ce que l'on homogénéise le composé catalytique avec le liant avant la protonation et en ce que l'on protone les constituants ensemble et on les dilue à l'eau.

3. Procédé selon la revendication 1, caractérisé en ce que l'on protone le composé catalytique et on le dilue à l'eau et en ce qu'on l'ajoute sous cette forme à un concentré de liant ou à un matériau de peinture dilué.

4. Procédé selon la revendication 3, caractérisé en ce que l'on ajoute le composé catalytique dilué à une peinture pour trempage électrophorétique qui se trouve dans une installation en fonctionnement.

5. Procédé selon les revendications 1 à 4, caractérisé en ce que l'on utilise comme composés catalytiques des produits de réaction de l'oxyde de plomb (II) avec des β-hydroxyalkylamines primaires, secondaires ou teriaires de faible poids moléculaire.

6. Procédé selon les revendications 1 à 4, caractérisé en ce que l'on utilise comme composés catalytiques des produits de réaction de l'oxyde de plomb (II) avec des produits d'addition de mono- ou dialcanolamines secondaires et de composés portant des groupes glycidyle.

7. Procédé selon la revendication 6, caractérisé en ce que l'on utilise comme composés catalytiques des produits de réaction de l'oxyde de plomb (II) avec des produits d'addition de dialcanolamines et de résines époxy du biphénol A.

8. Procédé selon les revendications 1 à 7, caractérisé en ce que l'on utilise des produits de réaction lors de la préparation desquels les groupes hydroxyle situés en position β des composés aminés ont réagi totalement ou partiellement avec l'oxyde de plomb (II).

9. Matériaux pour peintures cationiques catalysés, en particulier peintures précipitables à la cathode, caractérisés en ce qu'ils contiennent de 0.1 à 3.0% en poids, de préférence de 1,0 à 2,0% en poids de plomb (calculé sous forme de métal et par rapport à la matière solide du liant) sous forme des composé catalytiques utilisés selon les revendications 1 à 8.

**Claims**

1. Process for the catalyzation by lead compounds of cationic paint binders crosslinkable by transesterification and/or transamidation and/or transurethanation and/or reactions of terminal double bonds, characterized in that products of the reaction of lead (II) oxide with compounds comprising β-hydroxyalkylamino structures are added to the cationic paint material at any stage of the paint manufacture or during its subsequent use, especially in cathodic electrocoating.

2. Process according to Claim 1, characterized in that the catalyst compound is thoroughly mixed with the binder prior to protonization and the components are jointly protonized and diluted with water.

3. Process according to Claim 1, characterized in that the catalyst compound is protonized and diluted with water and is added in this state to a binder concentrate or to a thinned paint material.

4. Process according to Claim 3, characterized in that the diluted catalyst compound is added to an electrocoating paint contained in a production line installation.

5. Process according to Claims 1 to 4, characterized in that products of the reaction of lead (II) oxide with low-molecular primary, secondary or tertiay β-hydroxyalkylamines are used as catalyst compounds.

6. Process according to Claims 1 to 4, characterized in that products of the reaction of lead (II) oxide with adducts of secondary mono- or dialkanolamines and of compounds comprising glycidyl groups are used as catalyst compounds.

7. Process according to Claim 6, characterized in that products of the reaction of lead (II) oxide with adducts of dialkanolamines and of bisphenol A epoxy resins are used as catalyst compounds.

8. Process according to Claims 1 to 7, characterized in that those reaction products are used in the course of whose preparation the hydroxyl groups in the β-composition of the amino compounds have been fully or partly reacted with lead (II) oxide.

9. Catalyzed cationic paint materials, especially cathodically depositable paints, characterized in that they comprise 0.1 to 3.0, preferably 1.0 to 2.0 % by weight of lead (calculated as metal and based on binder solids content) in the form of the catalyst compounds used according to Claims 1 to 8.